(19) Europäisches Patentamt
European Patent Office
Office européen des brevets

(11) **EP 2 594 862 B1**

(12) **EUROPEAN PATENT SPECIFICATION**

(45) Date of publication and mention
of the grant of the patent:
**08.10.2014 Bulletin 2014/41**

(51) Int Cl.:
*F24J 2/07* (2006.01)    *F22B 1/00* (2006.01)
*F22B 35/02* (2006.01)

(21) Application number: **11306526.2**

(22) Date of filing: **21.11.2011**

(54) **Method of controlling a direct solar steam generator and corresponding control system**

Verfahren zur Steuerung eines Direktsonnenlicht-Dampfgererators und zugehöriges
Steuerungsverfahren

Procédé pour contrôler un générateur de vapeur solaire direct et système de contrôle correspondant

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.05.2013 Bulletin 2013/21**

(73) Proprietor: **Areva Solar, Inc
Mountain View CA 94043 (US)**

(72) Inventors:
• **Tanner, Peter
CA 94025 (US)**

• **Rasmussen, Kent
WA 98249 (US)**

(74) Representative: **Blot, Philippe Robert Emile
Cabinet Lavoix
2, place d'Estienne d'Orves
75441 Paris Cedex 09 (FR)**

(56) References cited:
**WO-A2-2010/132849    WO-A2-2011/064718
US-A1- 2008 127 647    US-A1- 2009 217 921**

## Description

The present invention relates a method for controlling a direct solar steam generator comprising a solar receiver having tubes fed with working fluid and subjected to concentrated solar energy for evaporating the working fluid into steam and flow actuators, the position of each flow actuator affecting flow parameters in the tubes. W

WO-A-2010 132 849 discloses a method for controlling a direct solar steam generator wherein the positions of flow actuators are controlled as a function of a control output of a model predictive controller.

An object of the invention is to propose a method of controlling a direct solar steam generator that enhances control of the exit steam conditions of the direct solar steam generator.

To this end, the invention proposes a method for controlling a direct solar steam generator according to claim 1

The invention also relates to a control system for controlling a direct solar steam generator according to claim 16.

The invention and its advantages will be better understood on reading the following description given solely by way of example and with reference to the appended drawings, in which:

- Figure 1 is a schematic top view of a linear Fresnel direct solar steam generator having a control system using a model predictive controller;
- Figure 2 is a block diagram illustrating an inlet controller of the control system of the solar steam generator of figure 1;
- Figure 3 is a block diagram illustrating an exit controller of the control system of the solar steam generator of figure 1 using the model prediction controller;
- Figure 4 is a block diagram illustrating an inlet controller according to another embodiment; and
- Figure 5 is a block diagram illustrating an exit controller according to another embodiment.

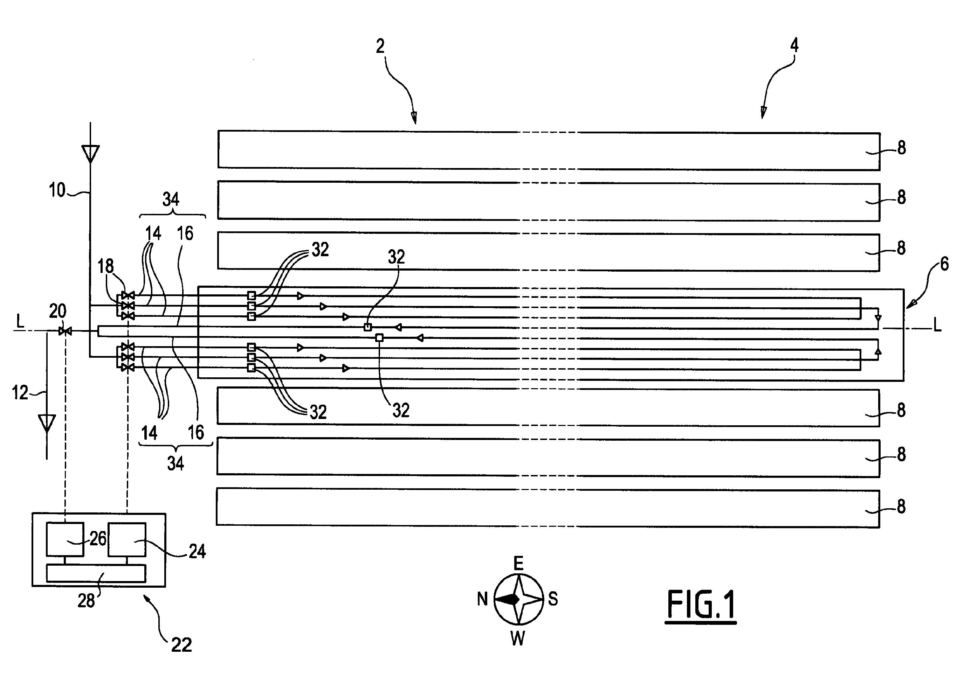

The direct solar steam generator 2 illustrated on Figure 1 comprises a solar concentrator 4 and a receiver 6. The concentrator 4 is configured for reflecting and concentrating solar radiations towards the receiver 6. The receiver 6 is configured for circulation of a working fluid, e.g. water, and evaporation of the working fluid into steam using heat of the concentrated solar radiations.

The solar steam generator 2 is of the linear type. The concentrator 4 and the receiver 6 are elongated in a longitudinal direction L.

Preferably, the concentrator 4 is of the Fresnel type. The concentrator 4 comprises a plurality of separate reflectors 8 elongated in the longitudinal direction L and distributed in a transverse direction. Each reflector 8 is pivotable about a longitudinal horizontal axis for reflecting solar radiations towards the receiver 6 depending on the position of the sun.

Preferably, the receiver 6 is placed at a height above the ground and the reflectors 8 are placed at ground level and arranged for reflecting solar radiations upwards toward the receiver 6.

The solar steam generator 2 comprises a feed line 10 for feeding working fluid in an essentially liquid state to the receiver 6 and a steam line 12 for collecting steam from the receiver 6.

The solar steam generator 2 is of the direct type. The receiver 6 comprises a plurality of parallel tubes for circulation of the working fluid and evaporation of the working fluid into steam due to solar radiations concentrated onto the tubes. Each tube extends in the longitudinal direction between the two opposite longitudinal ends of the receiver 6.

The receiver 6 comprises steam tubes 14 fed in parallel with working fluid from the feed line 10 and superheat tubes 16 fed with steam from the steam tubes 14 and feeding the steam line 12 with superheated steam.

The solar steam generator 2 comprises flow actuators for controlling flow parameter of working fluid through the receiver 6.

The flow actuators comprise inlet flow actuators for controlling parameters of the inlet flow entering the receiver 6. Preferably, inlet flow actuators comprise one respective inlet valve 18 provided at the inlet end of each steam tube 14 for controlling parameters of inlet flow entering each steam tube 14 individually.

The flow actuators comprise outlet flow actuators for controlling parameters of the steam outlet flow exiting the receiver 6. Preferably, outlet flow actuators comprise one single outlet valve 20 for controlling parameters of the outlet flow exiting the superheat tubes 16.

The solar steam generator 2 comprises a control system 22 for controlling the flow actuators. The control system 22 comprises an inlet controller 24 for controlling inlet valves 18 and an outlet controller 26 for controlling the outlet valve 20.

According to one aspect of the invention, the control system 22 comprises a model predictive controller 28 for determining control outputs for the inlet controller 24 and the outlet controller 26. The model predictive controller 28 runs a computer model of the solar steam generator or a lookup tables-based model allowing it to predict behavior of the solar steam generator and a future state based on inputs representing the state of the solar steam generator at a current time.

The inlet controller 24 and the outlet controller 26 each control respectively the inlet valves 18 and the outlet valve 20 depending on the control outputs determined by the model predictive controller 28.

The inputs of the model predictive controller 28 are dependant parameters and/or independent parameters of the solar steam generator 2.

An independent parameter is a parameter independent of the operation of the solar steam generator 2. Insolation and position of the sun are examples of independent parameters.

A dependant parameter is a parameter varying depending on the operation of the solar steam generator 2. Inlet flow, outlet flow, steam temperature, superheated steam temperature and steam pressure are examples of dependent parameters.

The solar steam generator 2 comprises sensors 32 for sensing dependant parameters and/or independent parameters of the solar steam generator 2. The control system 22 receives the signals of the sensors. The control system 22 uses these signals for controlling the solar steam generator 2. The inlet controller 24, the outlet controller 26 and the model predictive controller 28 each use the signal(s) of one or several of the sensors 32.

Sensors 32 may be of different types. Sensors 32 provided on tubes 14, 16 are illustrated on Figure 1 for sensing e.g. temperature or pressure. Additional sensors may be provided, namely for sensing insolation.

The tubes 14, 16 of the receiver 6 are distributed in at least one bank 34 of tubes. The control system 22 is configured to control the operation of each bank 34 of tubes individually. In a preferred embodiment, the tubes 14, 16 are divided in two banks 34 of tubes. As illustrated on Figure 1, each bank 34 of tubes comprises a plurality of steam tubes 14, here three steam tubes 14 and one single superheat tube 16 fed by the steam tubes 14 of the bank 34.

The longitudinal direction L is oriented North-South as illustrated by the compass on Figure 1 and the tubes 14, 16 are divided in an east bank 34 of tubes comprising the tubes 14, 16 located on the east side of a longitudinal vertical median plane of the receiver 6 and a west bank 34 of tubes and a west bank 34 of tubes comprising the tubes 14, 16 located on the west side of the median plane. Each bank 34 comprises a respective part of the plurality of tubes 14, 16 of the receiver 6.

In operation, working fluid in essentially liquid state circulates in the feed line 10. The working fluid is fed to the steam tubes 14 in parallel. The working fluid is evaporated in the steam tubes 14 heated by the solar radiations concentrated onto the steam tubes 14. The steam is feed to the superheat tubes 16. The steam is superheated in the superheat tubes 16 heated by the solar radiations concentrated onto the superheat tubes 16. The control system 22 controls the inlet valves 18 and the outlet valve 20.

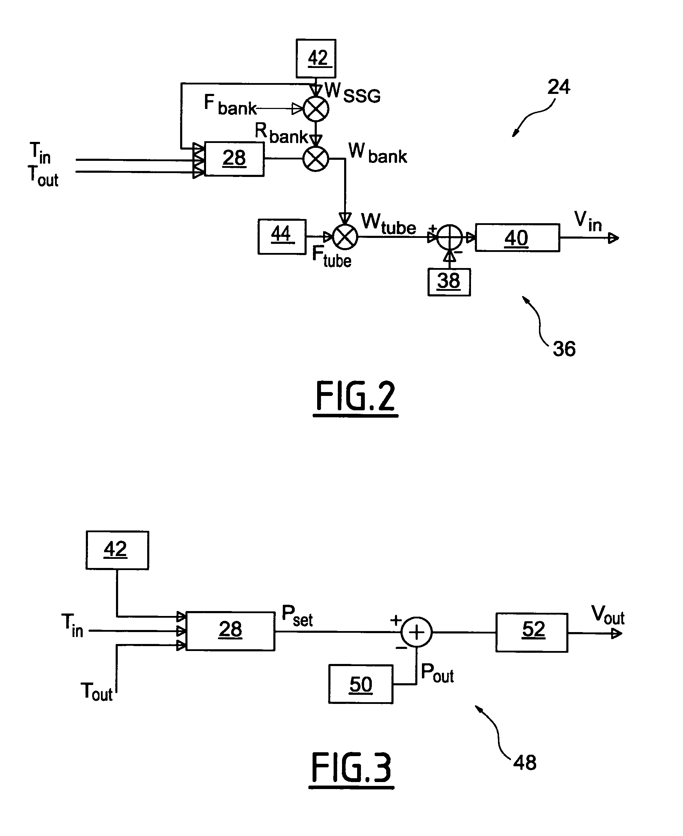

As illustrated in Figure 2, the inlet controller 24 is configured for controlling inlet mass flow rate in each steam tube 14 individually. In the following, unless specified otherwise, "flow" refers to mass flow rate

The inlet controller 24 determines a tube inlet flow setpoint $W_{tube}$ representative of a desired value for the inlet mass flow rate in each steam tube 14 individually and controls the position of the inlet valve 18 for equalizing a tube inlet flow estimate $W_{mes}$ representative of the actual inlet mass flow rate in the steam tube 14 with the tube inlet flow setpoint.

The inlet controller 24 comprises an inlet main control feedback loop 36 controlling the position of the inlet valve 18 for equalizing the tube inlet flow estimate $W_{mes}$ with the tube inlet flow setpoint $W_{tube}$.

The inlet main control feedback loop 36 comprises a tube flow estimate controller 38 determining the tube inlet flow estimate $W_{meas}$, a comparator determining the error, that is the difference between the tube inlet flow setpoint $W_{tube}$ and the tube inlet flow estimate $W_{meas}$ and an inlet valve regulator 40 receiving the error and outputting an inlet valve control instruction $V_{in}$. In a preferred embodiment, each inlet valve regulator 40 is a PID controller.

Only one inlet main control feedback loop 36 is illustrated on Figure 2 for the sake of clarity. The inlet controller 24 comprises an inlet main control feedback loop 36 for each steam tube 14.

The inlet controller 24 determines a total flow target representative $W_{ssg}$ of a desired value for the total flow in the solar steam generator 2. The total flow target $W_{ssg}$ is used as a feedforward signal for determining the tube flow setpoints $W_{tube}$. The inlet controller 24 comprises a total flow controller 42 determining the total flow target $W_{ssg}$ as a function of independent parameters.

In a preferred embodiment, the total flow target $W_{ssg}$ is determined as a ratio of the thermal input $Q_{in}$ to an expected enthalpy rise $\Delta H$ of the working fluid in the receiver 6.

The thermal input $Q_{in}$ is determined as a difference between a solar power input and a thermal loss. The solar power input is determined as a product of a measured direct normal insolation DNI and an optical efficiency $\eta(az, el)$ of the concentrator 4 evaluated instantaneously at the solar position namely the azimuth <u>az</u> and elevation <u>el</u> of the sun.

The thermal loss $Q_{loss}$ is predicted based on a model of the solar steam generator 2 and depends on different independent parameters such as ambient temperature, wind spind and geometry of the receiver cavity.

The enthalpy of the working fluid is a function of the working fluid pressure and temperature. The enthalpy is implemented with industry standard steam tables (see IAPWS-IF97). The expected enthalpy rise $\Delta H$ is the difference between inlet enthalpy and outlet enthalpy. In a preferred embodiment, this value is set as a fixed constant value depending on nominal preset values of exit pressure $P_{out}$, exit temperature $T_{out}$, inlet pressure $P_{in}$ and inlet temperature $T_{in}$.

The total mass flow target is determined as a function of the following equations:

$$W_{ssg} = \frac{Q_{in}}{\Delta H}$$

$$\Delta H = H(P_{out,}\, T_{out}) - H\,(P_{in},\, T_{in})$$

$$Q_{in} = DIN \times \eta(az,\, el) - Q_{loss}$$

The inlet controller 24 determines for each bank of tubes a bank flow target $W_{bank}$ as a function of the total flow target $W_{ssg}$. The bank flow target $W_{bank}$ is determined as a fraction of the total flow target $W_{ssg}$ corrected by a bank correction coefficient $R_{bank}$ determined by the model predictive controller 28 for each bank 34. The inlet controller 24 determines each bank flow target $W_{bank}$ by multiplying the total flow target by a bank fraction $F_{bank}$ and by the bank correction coefficient $R_{bank}$ of the bank 34.

In a preferred embodiment, the bank fraction $F_{bank}$ is identical for the banks. In the example, the solar steam generator 2 comprises two banks and the bank fraction $F_{bank}$ equals 0.5.

Inputs of the model predictive controller 28 comprise a feed temperature estimate $T_{in}$ representative of the temperature of the working fluid in the feed line 10. Sensors comprise at least one temperature sensor for measuring working fluid temperature in the feed line 10.

Inputs of the model predictive controller 28 comprise an exit temperature estimate $T_{out}$ representative of the temperature of the steam in the steam line 12. First sensors 30 comprise a temperature sensor for measuring temperature of the steam in the steam line 12.

Inputs of the model predictive controller 28 comprise the total flow target $W_{ssg}$.

The inlet controller 24 allocates a fraction of the bank flow target $W_{bank}$ of each bank 34 to the steam tubes 14 of said bank 34 fed in parallel with working fluid. The inlet controller 24 comprises a split controller 44 outputting a tube fraction $F_{tube}$ for each steam tube 14. In a preferred embodiment, the tube fractions are fixed. The tube fractions $F_{tube}$ are equal or different. In any case, the tube fractions $F_{tube}$ are such that the sum of the tube fractions $F_{tube}$ of the steam tubes of a bank equals 1.

The tube flow estimate controller 38 determines the tube flow estimate $W_{meas}$ for each steam tube 14 as a function of the signal delivered by at least one sensor sensing a parameter related to flow in the steam tubes 14.

In one embodiment, the inlet controller 24 determines the tube flow estimate $W_{meas}$ as a function of signals delivered by mass flow meters located along the steam tubes 14.

In an alternative embodiment, the tube flow estimates $W_{mes}$ are determined as a function of a total bulk flow estimate $W_{bulk}$ representative of bulk flow at receiver 6 inlet and determined based on the signal of a bulk flow meter provided on the feed line 10. The inlet flow estimate controller 38 determines the tube flow estimate in each steam tube 14 as the product of the total bulk flow estimate $W_{bulk}$ with the ratio of the flow coefficient Cv of the inlet valve 18 of said steam tube 14 at the current valve position $\underline{z}$ with the sum of the flow coefficients Cv of the inlet valves 18 at the current valve positions $\underline{z}$ of the inlet valves. The flow coefficient Cv of a valve is a coefficient that relates the flow rate through a valve to the pressure drop taken across the valve. The flow coefficient Cv of a valve is related to its position $\underline{z}$. This embodiment necessitates determining the flow coefficient curves defining the flow coefficient Cv of each inlet valve 18 as a function of the position $\underline{z}$ of the inlet valve 18. Mass flow in each steam tube is determined by the following equation:

$$W_{ssg} = \frac{Cv(z)}{\sum\limits_{k} Cv_k(z_k)} W_{bulk}$$

As illustrated on figure 3, the exit controller 26 controls the position of the exit valve 20. The exit controller 26 comprises an exit control feedback loop 48 controlling the exit valve 20. The exit control feedback loop 48 comprises exit pressure estimate controller 50 determining an exit pressure estimate $P_{out}$ representative of superheat steam pressure at receiver outlet, a comparator determining an error as a difference between an exit pressure setpoint $P_{set}$ and the exit pressure estimate $P_{out}$ and an exit valve regulator 52 receiving the error and outputting an exit valve control instruction $V_{out}$. In a preferred embodiment, the exit valve regulator 52 is a PID controller.

The model predictive controller 28 determines the exit pressure setpoint. The exit controller 26 comprises an determining the exit pressure estimate.

In operation, the inlet controller 24 determines the tube flow setpoints $W_{tube}$ and controls the inlet valves 18 to minimize the difference between the tube flow setpoints $W_{tube}$ and the tube flow estimates $W_{meas}$. The inlet controller 24 adjusts the position of the inlet valves 18 depending on the errors detected.

The model predictive controller 28 is used to control the tube flow setpoints $W_{tube}$. The model predictive controller 28 receives dependant parameters as inputs. The model predictive controller 24 is arranged in a control feedback loop controlling the tube flow setpoints $W_{tube}$ and acting as an outer control loop controlling setpoints for the inlet control feedback loops 36 acting as inner control loop.

Besides, the model predictive controller 28 is used to directly set an exit pressure setpoint $P_{set}$. Each exit valve 20 is controlled to minimize the difference between the exit pressure setpoint $P_{set}$ and the exit pressure estimate $P_{meas}$.

The model predictive controller 28 predicts the state of the solar steam generator 2 depending on inputs corresponding to current parameters. Prediction of the state in a future time allows controlling the solar steam generator 2 with taking into account the reaction of the solar steam generator 2 to the modification of the position of the inlet valves 18 and the outlet valve 20. This allows enhancing control of the solar steam generator 2.

Preferably, the model predictive controller 28 solves the model in a flow normalized time. To this end, in an embodiment, the model predictive controller 28 scans the total flow target $W_{ssg}$ at a fast rate, e.g. every two seconds, and determines the next controller execution time based on the current flow target. If elapsed time since the last controller execution exceeds the desired next execution time, it samples variables required and calculates the next control outputs ($R_{bank}$, $P_{out}$).

In the embodiment of Figures 2 and 3, the total flow target $W_{ssg}$ is a feedforward signal calculated as a function of independent parameters.

In an alternative embodiment, the total flow target $W_{ssg}$ is determined with estimating the thermal input $Q_{in}$ as a function of dependent parameters. In a preferred embodiment, the thermal input $Q_{in}$ is calculated as the sum of the product of an exit steam flow $W_{steam}$ with the expected enthalpy rise $\Delta H$ and the product of the rate of change of exit pressure $dP_{exit}/dt$ and a factor $\Gamma$ that relates thermal input power absorbed by the working fluid to the rate of change in exit pressure. The thermal input is calculated as per the following equation:

$$Q_{in} = W_{steam} \times \Delta H + \Gamma \frac{dPexit}{dt}$$

In the inlet controller 24 of Figure 2, the split controller 46 divides the bank flow target $W_{bank}$ across the steam tubes 14 by multiplying the bank flow target $W_{bank}$ by a fixed tube fraction $F_{tube}$.

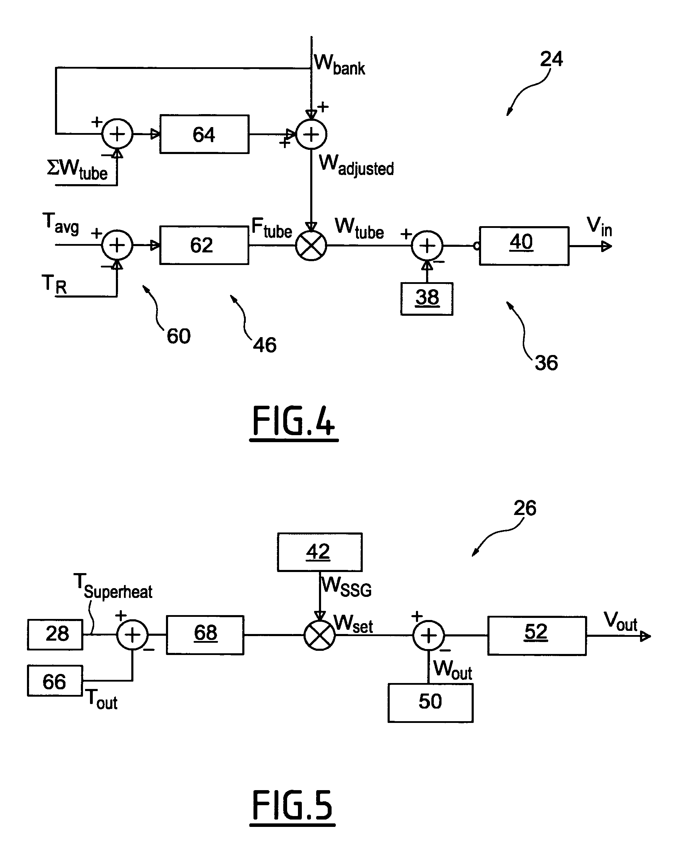

In the alternative embodiment of Figure 4, the split controller 46 varies the values of the tube fractions $F_{tube}$ to equalize temperatures in an economizer section of steam tubes 14 of the receiver 6. The economizer section of the steam tubes 14 is a section where steam is expected to be sub cooled.

The split controller 46 controls the inlet tube flow setpoint $W_{tube}$ for each individual steam tube 14 of each bank 34 with a split control feedback loop 60 to equalize a temperature $T_k$ estimate representative of the temperature in each steam tube 14 with the average temperature $T_{avg}$ in all the steam tubes 14 of the receiver 6, or alternatively in the steam tubes 14 of the bank 34 comprising the considered steam tube 14.

The split control feedback loop 60 comprises for each steam tube 14 a fraction regulator 62 receiving in input the difference between the average temperature $T_{avg}$ and the temperature estimate $T_k$ of the steam tube 14 $T_k$ and outputting a tube fraction. The fraction regulator 62 is e.g. a PID controller.

The fraction regulator 62 might lead to a bank flow target $W_{bank}$ different from the sum of the tube flow targets $W_{tube}$ of the steam tubes 14 of the bank 34.

To account for this, the split control feedback loop 60 further comprises an adjusting controller 64 for adjusting the bank flow target $W_{bank}$. The adjusting controller 64 receives the difference between the bank flow target $W_{bank}$ and the sum of the tube flow targets $\Sigma W_{tube}$ of the tubes of the banks and outputs an adjustment value which is added to the bank flow $W_{bank}$ target for determining an adjusted bank flow target $W_{adjusted}$. The adjusting controller 64 is e.g. a PID controller. Each tube flow target $W_{tube}$ is determined as the product of the adjusted bank flow target $W_{adjusted}$ with the tube fraction $F_{tube}$.

The exit controller 26 of Figure 3 is an exit pressure controller. Alternatively, the exit controller 26 is a flow controller.

In a preferred embodiment of an exit flow controller illustrated on Figure 5, the model predictive controller 28 is configured to output a superheat temperature target $T_{superheat}$ representative of a desired value for the temperature of the superheated steam at the outlet of the receiver 6.

The exit controller 26 comprises a superheat temperature module 66 for determining a superheat temperature estimate. The superheat temperature estimate $T_{out}$ is determined as a function of a temperature sensor located on the steam line 12.

The exit controller 26 comprises a superheat controller 68 receiving as input the difference between the superheat temperature target $T_{superheat}$ and the superheat temperature estimate $T_{out}$ and output an exit control coefficient $R_{out}$.

The exit controller 26 determines an exit flow setpoint $W_{set}$ as the product of the total flow target with the exit control coefficient. The exit valve regulator 52 receives the difference between the exit flow setpoint $W_{set}$ and the exit steam flow estimate West and outputs an exit valve position instruction $V_{out}$.

According to the invention, it is possible to control a solar steam generator efficiently despite the numerous parameters, the varying external independent parameters such as insolation, to existence of long time delays and to inverse response to disturbance inputs.

**Claims**

1. Method for controlling a direct solar steam generator comprising a solar receiver having tubes (14, 16) fed with working fluid and subjected to concentrated solar energy for evaporating the working fluid into steam and flow actuators (18, 20), the flow actuators comprising outlet flow actuators (20) for controlling outlet flow exiting the receiver (6), the position of each flow actuator (18, 20) affecting flow parameters in the tubes (14, 16), the method comprising controlling the positions of the flow actuators (18, 20) as a function of at least one control output ($R_{bank}$, $P_{set}$,

$R_{out}$) of a model predictive controller (28) configured to predict the behaviour of the direct solar steam generator (2) as a function of inputs comprising independent and/or dependant parameters of the direct solar steam generation system (2), wherein the method comprises controlling the outlet flow actuators (20) to equalize an exit pressure estimate ($P_{out}$) representative of a current value of the steam pressure at the outlet of the receiver with an exit pressure setpoint ($P_{set}$) representative of a desired value for the steam pressure at the outlet of the receiver (6), the exit pressure setpoint ($P_{set}$) being set by the model predictive controller (28).

2. Method according to claim 1, comprising determining a flow parameter setpoint ($W_{tube}$, $W_{set}$) representative of a desired value for the flow parameter as a function of at least one output ($R_{bank}$, Rout) of the model predictive controller (28) and controlling the position of at least one flow actuator (18, 20) with a control feedback loop (36, 48) to equalize a flow parameter estimate ($W_{meas}$, $W_{out}$) representative of the current flow parameter in the solar steam generator (2) with the flow parameter setpoint.

3. Method according to claim 2, comprising determining a flow parameter target ($W_{bank}$) as a product of a flow parameter target ($W_{ssg}xF_{bank}$) with the control coefficient ($R_{bank}$) and determining the main flow parameter setpoint ($W_{tube}$) as a function of the flow parameter target ($W_{bank}$).

4. Method according to claims 2 or 3, comprising determining a bank flow target ($W_{bank}$, $W_{adjusted}$) representative of a target flow through a bank of tubes comprising a plurality of tubes (14) fed in parallel and allocating a fraction of the bank flow target ($W_{bank}$, $W_{adjusted}$) to each tube (14).

5. Method according to claim 4, comprising allocating a fixed fraction ($F_{tube}$) to each tube (14).

6. Method according to claim 4, comprising determining a varying tube fraction ($F_{tube}$) for each tube as a function a difference of a tube temperature estimate representative of working fluid temperature in the tube and an average temperature determined as the average of tube temperature estimates in a plurality of tubes.

7. Method according to claim 6, wherein average temperature is determined as the average of tube temperature estimates in tubes ot the bank or in tubes of several banks of the solar receiver (6).

8. Method according to claim 6 or 7, comprising adjusting the bank flow target as a function of the difference between the bank flow target and the sum of the tube flow targets of the tubes of the banks.

9. Method according to any one of claims 2 - 8, comprising controlling a flow actuator as a function of an exit coefficient ($R_{out}$) output by a regulator as a function of a difference between a target steam temperature ($T_{superheat}$) representative of a temperature desired at the outlet of the receiver (6) determined by the model predictive controller (28) and a steam temperature estimate ($T_{out}$) representative of the current steam temperature at the outlet of the receiver (6).

10. Method according to any one of claims 2-9, comprising determining an exit flow target ($W_{out}$) as the function of the product of a nominal flow target ($W_{ssg}$) with an output of the regulator.

11. Method according to any one of claims 2 - 10, comprising determining a total flow target representative of a desired value of the flow of working fluid through the receiver (6) as a function of a total inlet flow target determined as a ratio of a thermal input representative of a thermal input to the working fluid in the solar steam generator to an expected enthalpy rise representative of an enthalpy rise of the working fluid in the solar steam generator.

12. Method according to claim 11, comprising determining the thermal input as the difference between a solar energy input representative if the solar energy received by the working fluid in the solar steam generator and a thermal loss representative of thermal loss of the working fluid in the solar steam generator.

13. Method according to claim 11, comprising determining the thermal input as the addition of an exit steam flow measure and the product of an exit steam pressure change rate with a coefficient relating exit steam pressure change rate to flow.

14. Method according to any one of claims 2 - 13, wherein the model predictive controller refreshes outputs in a flow normalized time.

15. Method according to any one of the preceding claims, wherein the outlet flow actuators comprises exit valves (20), each exit valve (20) being controlled to equalize the exit pressure estimate ($P_{out}$) with the exit pressure setpoint ($P_{set}$) set by the model predictive controller (28).

16. Control system for controlling a direct solar steam generator according to a method according to any one of the preceding claims, the control system comprising a model predictive controller (28) configured to predict the behaviour of the direct solar steam generator (2) as a function of inputs comprising independent and/or dependant parameters of the direct solar steam generation system (2), the control system comprising at least one controller for controlling the positions of the flow actuators (18, 20) as a function of at least one control output ($R_{bank}$, $P_{set}$, $R_{out}$) of said model predictive controller (28), and for controlling the outlet flow actuators (20) to equalize an exit pressure estimate ($P_{out}$) representative of a current value of the steam pressure at the outlet of the receiver with an exit pressure setpoint ($P_{set}$) representative of a desired value for the steam pressure at the outlet of the receiver (6), the exit pressure setpoint ($P_{set}$) being set by the model predictive controller (28).

**Patentansprüche**

1. Verfahren zum Steuern eines Direktsolardampfgenerators, der einen Solarempfänger mit Rohren (14, 16), die mit Arbeitsfluid gespeist und zum Verdampfen des Arbeitsfluids zu Dampf konzentrierter Solarenergie ausgesetzt werden, und Strömungsaktuatoren (18, 20) umfasst, wobei die Strömungsaktuatoren Auslassströmungsaktuatoren (20) zum Steuern von Auslassströmung umfassen, die den Empfänger (6) verlässt, die Position jedes Strömungsaktuators (18, 20) Strömungsparameter in den Rohren (14, 16) beeinflusst, das Verfahren ein Steuern der Position der Strömungsaktuatoren (18, 20) als eine Funktion mindestens einer Steuerausgabe ($R_{bank}$, $P_{set}$, $R_{out}$) einer modellprädiktiven Steuerung (28) umfasst, die so konfiguriert ist, dass sie das Verhalten des Direktsolardampfgenerators (2) als eine Funktion von Eingaben vorhersagt, die unabhängige und/oder abhängige Parameter des Direktsolardampferzeugungssystems (2) umfassen, wobei das Verfahren ein derartiges Steuern der Auslassströmungsaktuatoren (20) umfasst, dass eine Austrittsdruckschätzung ($P_{out}$), die einen aktuellen Wert des Dampfdrucks am Auslass des Empfängers darstellt, mit einem Austrittsdruck-Sollwert ($P_{set}$), der einen gewünschten Wert für den Dampfdruck am Auslass des Empfängers (6) darstellt, ausgeglichen wird, wobei der Austrittsdruck-Sollwert ($P_{set}$) durch die modellprädiktive Steuerung (28) festgelegt wird.

2. Verfahren nach Anspruch 1, umfassend ein Bestimmen eines Strömungsparamater-Sollwerts ($W_{tube}$, $W_{set}$), der einen gewünschten Wert für den Strömungsparameter als eine Funktion mindestens einer Ausgabe ($R_{bank}$, $R_{out}$) der modellprädiktiven Steuerung (28) darstellt, und derartiges Steuern der Position des mindestens einen Strömungsaktuators (18, 20) mit einem Regelkreis mit Rückführung (36, 48), dass eine Strömungsparameterschätzung ($W_{meas}$, $W_{out}$), die den aktuellen Strömungsparameter im Solardampfgenerator (2) darstellt, mit dem Strömungsparamater-Sollwert ausgeglichen wird.

3. Verfahren nach Anspruch 2, umfassend ein Bestimmen eines Strömungsparameterziels ($W_{bank}$) als ein Produkt eines Strömungsparameterziels ($W_{ssg}$ x $F_{bank}$) mit dem Steuerkoeffizienten ($R_{bank}$) und Bestimmen des Hauptströmungsparameter-Sollwerts ($W_{tube}$) als eine Funktion des Strömungsparameterziels ($W_{bank}$).

4. Verfahren nach Anspruch 2 oder 3, umfassend ein Bestimmen eines Bündelströmungsziels ($W_{bank}$, $W_{adjusted}$), das eine Zielströmung durch ein Rohrbündel darstellt, das eine Mehrzahl von Rohren (14) umfasst, die parallel gespeist werden, und Zuteilen einer Fraktion des Bündelströmungsziels ($W_{bank}$, $W_{adjusted}$) zu jedem Rohr (14).

5. Verfahren nach Anspruch 4, umfassend ein Zuteilen einer festen Fraktion ($F_{tube}$) zu jedem Rohr (14).

6. Verfahren nach Anspruch 4, umfassend ein Bestimmen einer variierenden Rohrfraktion ($F_{tube}$) für jedes Rohr als eine Funktion einer Differenz einer Rohrtemperaturschätzung, welche die Arbeitsfluidtemperatur im Rohr darstellt, und einer Durchschnittstemperatur, die als der Durchschnitt von Rohrtemperaturschätzungen in einer Mehrzahl von Rohren bestimmt wird.

7. Verfahren nach Anspruch 6, wobei die Durchschnittstemperatur als der Durchschnitt von Rohrtemperaturschätzungen in Rohren des Bündels oder in Rohren mehrerer Bündel des Solarempfängers (6) bestimmt wird.

8. Verfahren nach Anspruch 6 oder 7, umfassend ein Anpassen des Bündelströmungsziels als eine Funktion der Differenz zwischen dem Bündelströmungsziel und der Summe der Rohrströmungsziele der Rohre der Bündel.

9. Verfahren nach einem der Ansprüche 2 bis 8, umfassend ein Steuern eines Strömungsaktuators als eine Funktion eines Austrittskoeffizienten ($R_{out}$), der durch einen Regler als eine Funktion einer Differenz zwischen einer Zieldampftemperatur ($T_{superheat}$), die eine am Auslass des Empfängers (6) gewünschte Temperatur darstellt, die durch die modellprädiktive Steuerung (28) bestimmt wird, und einer Dampftemperaturschätzung ($T_{out}$), welche die aktuelle Dampftemperatur am Auslass des Empfängers (6) darstellt, ausgegeben wird.

10. Verfahren nach einem der Ansprüche 2 bis 9, umfassend ein Bestimmen eines Austrittsströmungsziels ($W_{out}$) als die Funktion des Produkts eines Nennströmungsziels ($W_{ssg}$) mit einer Ausgabe des Reglers.

**11.** Verfahren nach einem der Ansprüche 2 bis 10, umfassend ein Bestimmen eines Gesamtströmungsziels, das einen gewünschten Wert der Strömung von Arbeitsfluid durch den Empfänger (6) als eine Funktion eines Gesamteinlassströmungsziels darstellt, das als ein Verhältnis einer Wärmeeingabe, die eine Wärmeeingabe in das Arbeitsfluid im Solardampfgenerator darstellt, zu einem erwarteten Enthalpieanstieg, der einen Enthalpieanstieg des Arbeitsfluids im Solardampfgenerator darstellt, bestimmt wird.

**12.** Verfahren nach Anspruch 11, umfassend ein Bestimmen der Wärmeeingabe als die Differenz zwischen einer Solarenergieeingabe, welche die durch das Arbeitsfluid im Solardampfgenerator empfangene Solarenergie darstellt, und einem Wärmeverlust, der den Wärmeverlust des Arbeitsfluids im Solardampfgenerator darstellt.

**13.** Verfahren nach Anspruch 11, umfassend ein Bestimmen der Wärmeeingabe als die Addition eines Austrittsdampfströmungsmaßes und des Produkts einer Austrittsdampfdruckänderungsrate mit einem Koeffizienten, der die Austrittsdampfdruckänderungsrate mit der Strömung in Beziehung setzt.

**14.** Verfahren nach einem der Ansprüche 2 bis 13, wobei die modellprädiktive Steuerung Ausgaben in einer Strömungsnormalisierungszeit aktualisiert.

**15.** Verfahren nach einem der vorhergehenden Ansprüche, wobei die Auslassströmungsaktuatoren Austrittsventile (20) umfassen, wobei jedes Austrittsventil (20) so gesteuert wird, dass die Austrittsdruckschätzung ($P_{out}$) mit dem Austrittsdruck-Sollwert ($P_{set}$) ausgeglichen wird, der durch die modellprädiktive Steuerung (28) festgelegt wird.

**16.** Steuersystem zum Steuern eines Direktsolardampfgenerators gemäß einem Verfahren nach einem der vorhergehenden Ansprüche, wobei das Steuersystem eine modellprädiktive Steuerung (28) umfasst, die so konfiguriert ist, dass sie das Verhalten des Direktsolardampfgenerators (2) als eine Funktion von Eingaben vorhersagt, die unabhängige und/oder abhängige Parameter des Direktsolardampferzeugungssystems (2) umfassen, das Steuersystem mindestens eine Steuerung zum Steuern der Positionen der Strömungsaktuatoren (18, 20) als eine Funktion mindestens einer Steuerausgabe ($R_{bank}$, $P_{set}$, $R_{out}$) der modellprädiktiven Steuerung (28) und zum derartigen Steuern der Auslassströmungsaktuatoren (20) umfasst, dass eine Austrittsdruckschätzung ($P_{out}$), die einen aktuellen Wert des Dampfdrucks am Auslass des Empfängers darstellt, mit einem Austrittsdruck-Sollwert ($P_{set}$), der einen gewünschten Wert für den Dampfdruck am Auslass des Empfängers (6) darstellt, ausgeglichen wird, wobei der Austrittsdruck-Sollwert ($P_{set}$) durch die modellprädiktive Steuerung (28) festgelegt wird.

**Revendications**

**1.** Procédé de commande d'un générateur de vapeur solaire direct comprenant un récepteur solaire comportant des tubes (14, 16) alimentés en fluide de travail et soumis à une énergie solaire concentrée pour évaporer le fluide de travail sous forme de vapeur et des actionneurs d'écoulement (18, 20), les actionneurs d'écoulement comprenant des actionneurs d'écoulement de sortie (20) pour commander l'écoulement de sortie sortant du récepteur (6), la position de chaque actionneur d'écoulement (18, 20) affectant les paramètres d'écoulement dans les tubes (14, 16), le procédé comprenant la commande des positions des actionneurs d'écoulement (18, 20) en fonction d'au moins une sortie de commande ($R_{bank}$, $P_{set}$, $R_{out}$) d'un contrôleur à modèle prédictif (28) configuré pour prédire le comportement du générateur de vapeur solaire passif (2) en fonction d'entrées comprenant des paramètres indépendants et/ou dépendants du système de génération de vapeur solaire direct (2), dans lequel le procédé comprend la commande des actionneurs d'écoulement de sortie (20) pour égaliser une estimation de pression de sortie ($P_{out}$) représentative d'une valeur actuelle de la pression de vapeur à la sortie du récepteur avec un point de consigne de pression de sortie ($P_{set}$) représentatif d'une valeur souhaitée pour la pression de vapeur à la sortie du récepteur (6), le point de consigne de sortie ($P_{set}$) étant fixé par le contrôleur à modèle prédictif (28).

**2.** Procédé selon la revendication 1, comprenant la détermination d'un point de consigne de paramètre d'écoulement ($W_{tube}$, $W_{set}$) représentatif d'une valeur souhaitée pour le paramètre d'écoulement en fonction d'au moins une sortie ($R_{bank}$, $R_{out}$) du contrôleur à modèle prédictif (28) et la commande de la position d'au moins un actionneur d'écoulement (18, 20) par une boucle de commande à rétroaction (36, 48) pour égaliser une estimation de paramètre d'écoulement ($W_{meas}$, $W_{out}$) représentative du paramètre d'écoulement actuel dans le générateur de vapeur solaire (2) avec le point de consigne de paramètre d'écoulement.

**3.** Procédé selon la revendication 2, comprenant la détermination d'une cible de paramètre d'écoulement ($W_{bank}$) en tant que produit d'une cible de paramètre d'écoulement ($W_{ssg} \times F_{bank}$) et du coefficient de commande ($R_{bank}$) et la détermination du point de consigne de paramètre d'écoulement principal ($W_{tube}$) en fonction de la cible de paramètre d'écoulement

($W_{bank}$).

**4.** Procédé selon la revendication 2 ou 3, comprenant la détermination d'une cible d'écoulement de nappe ($W_{bank}$, $W_{ajusted}$) représentative d'un écoulement cible à travers une nappe de tubes comprenant une pluralité de tubes (14) alimentés en parallèle et l'attribution d'une fraction de la cible d'écoulement de nappe ($W_{bank}$, $W_{ajusted}$) à chaque tube (14).

**5.** Procédé selon la revendication 4, comprenant l'attribution d'une fraction fixe ($F_{tube}$) à chaque tube (14).

**6.** Procédé selon la revendication 4, comprenant la détermination d'une fraction de tube variable ($F_{tube}$) pour chaque tube en fonction d'une différence entre une estimation de température de tube représentative de la température du fluide de travail dans le tube et une température moyenne déterminée en tant que moyenne des estimations de température de tube dans une pluralité de tubes.

**7.** Procédé selon la revendication 6, dans lequel la température moyenne est déterminée en tant que moyenne des estimations de température de tube dans les tubes de la nappe ou dans les tubes de plusieurs nappes du récepteur solaire (6).

**8.** Procédé selon la revendication 6 ou 7, comprenant l'ajustement de la cible d'écoulement de nappe en fonction de la différence entre la cible d'écoulement de nappe et la somme des cibles d'écoulement de tube des tubes des nappes.

**9.** Procédé selon l'une quelconque des revendications 2 à 8, comprenant la commande d'un actionneur d'écoulement en fonction d'un coefficient de sortie ($R_{out}$) délivré par un régulateur en fonction d'une différence entre une température de vapeur cible ($T_{superheat}$) représentative d'une température souhaitée à la sortie du récepteur (6) déterminée par le contrôleur à modèle prédictif (28) et une estimation de température de vapeur ($T_{out}$) représentative de la température de vapeur actuelle à la sortie du récepteur (6).

**10.** Procédé selon l'une quelconque des revendications 2 à 9, comprenant la détermination d'une cible d'écoulement de sortie ($W_{out}$) en fonction du produit d'une cible d'écoulement nominale ($W_{ssg}$) et d'une sortie du régulateur.

**11.** Procédé selon l'une quelconque des revendications 2 à 10, comprenant la détermination d'une cible d'écoulement totale représentative d'une valeur souhaitée de l'écoulement de fluide de travail à travers le récepteur (6) en fonction d'une cible d'écoulement d'entrée totale déterminée en tant que rapport entre une entrée thermique représentative d'une entrée thermique pour le fluide de travail dans le générateur de vapeur solaire et une augmentation d'enthalpie attendue représentative d'une augmentation d'enthalpie du fluide de travail dans le générateur de vapeur solaire.

**12.** Procédé selon la revendication 11, comprenant la détermination de l'entrée thermique en tant que différence entre une entrée d'énergie solaire représentative de l'énergie solaire reçue par le fluide de travail dans le générateur de vapeur solaire et une perte thermique représentative de la perte thermique du fluide de travail dans le générateur de vapeur solaire.

**13.** Procédé selon la revendication 11, comprenant la détermination de l'entrée thermique en tant qu'addition d'une mesure d'écoulement de vapeur de sortie et du produit d'un taux de variation de pression de vapeur de sortie et d'une coefficient liant le taux de variation de pression de vapeur de sortie à l'écoulement.

**14.** Procédé selon l'une quelconque des revendications 2 à 13, dans lequel le contrôleur de prédiction de modèle rafraîchit les sorties dans un temps normalisé d'écoulement.

**15.** Procédé selon l'une quelconque des revendications précédentes, dans lequel les actionneurs d'écoulement de sortie comprennent des vannes de sortie (20), chaque vanne de sortie (20) étant commandée pour égaliser l'estimation de pression de sortie ($P_{out}$) avec le point de consigne de pression de sortie ($P_{set}$) fixé par le contrôleur à modèle prédictif (28).

**16.** Système de commande pour commander un générateur de vapeur solaire passif conformément à un procédé selon l'une quelconque des revendications précédentes, le système de commande comprenant un contrôleur à modèle prédictif (28) configuré pour prédire le comportement du générateur de vapeur solaire passif (2) en fonction d'entrées comprenant des paramètres indépendants et/ou dépendants du système de génération de vapeur solaire direct (2), le système de commande comprenant au moins un contrôleur pour commander les positions des actionneurs d'écoulement (18, 20) en fonction d'au moins une sortie de commande ($R_{bank}$, $P_{set}$, $R_{out}$) dudit contrôleur à modèle prédictif (28), et pour commander les actionneurs d'écoulement de sortie (20) pour égaliser une estimation de pression de sortie ($P_{out}$) représentative d'une valeur actuelle de la pression de vapeur à la sortie du récepteur avec un point de consigne de pression de sortie ($P_{set}$) représentatif d'une valeur souhaitée pour la pression de vapeur à la sortie du récepteur (6), le point de consigne de

pression de sortie ($P_{set}$) étant fixé par le contrôleur à modèle prédictif (28).

FIG.1

EP 2 594 862 B1

FIG.2

FIG.3

## FIG.4

## FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010132849 A